# EUROPEAN PATENT SPECIFICATION

(11) **EP 3 008 026 B1**
(45) Date of publication and mention of the grant of the patent: **06.07.2022**
(21) Application number: 14736231.3
(22) Date of filing: 13.06.2014
(51) Int. Cl.: C03C 21/00, C03C 27/00, B32B 17/00, C03C 3/062, C03C 3/12, C03C 3/064

(54) **LAMINATED GLASS ARTICLE WITH SCRATCH RESISTANT SURFACE**
VERBUNDGLASARTIKEL MIT KRATZFESTER OBERFLÄCHE
ARTICLE EN VERRE FEUILLETÉ AYANT UNE SURFACE RÉSISTANTE À LA RAYURE

(30) Priority: 14.06.2013 US 201361835214 P
(43) Date of publication of application: 20.04.2016
(60) Divisional application: 22174125.9
(73) Proprietor: Corning Incorporated, Corning, New York 14831 (US)
(72) Inventor: DEJNEKA, Matthew, John, Corning, New York 14830 (US); MAURO, John, Christopher, Corning, New York 14830 (US)
(74) Representative: Elkington and Fife LLP
(86) International application number: PCT/US2014/042240
(87) International publication number: WO 2014/201320

(56) References cited:
- WO-A1-2013/016157
- STEIMACHER A ET AL: "Characterization of thermo-optical and mechanical properties of calcium aluminosilicate glasses", JOURNAL OF NON-CRYSTALLINE SOLIDS, NORTH-HOLLAND PHYSICS PUBLISHING. AMSTERDAM, NL, vol. 352, no. 32-35, 15 September 2006 (2006-09-15), pages 3613-3617, XP028046315, ISSN: 0022-3093, DOI: 10.1016/J.JNONCRYSOL.2006.03.091 [retrieved on 2006-09-15]
- LUU-GEN HWA ET AL: "Elastic moduli of low-silica calcium alumino-silicate glasses", MATERIALS CHEMISTRY AND PHYSICS, vol. 78, no. 1, 1 February 2003 (2003-02-01), pages 105-110, XP055138896, ISSN: 0254-0584, DOI: 10.1016/S0254-0584(02)00331-0

## Description

### BACKGROUND

### Field

The present specification generally relates to laminated glass articles and, more specifically, to laminated glass articles having a hard scratch resistant outer surface.

### Technical Background

Glass articles, such as cover glasses, glass backplanes and the like, are employed in both consumer and commercial electronic devices such as LCD and LED displays, computer monitors, automated teller machines (ATMs) and the like. Some of these glass articles may include "touch" functionality which necessitates that the glass article be contacted by various objects including a user's fingers and/or stylus devices and, as such, the glass must be sufficiently robust to endure regular contact without damage. Moreover, such glass articles may also be incorporated in portable electronic devices, such as mobile telephones, personal media players, and tablet computers. The glass articles incorporated in these devices may be susceptible to damage during transport and/or use of the associated device. Accordingly, glass articles used in electronic devices may require enhanced strength to be able to withstand not only routine "touch" contact from actual use, but also incidental contact and impacts which may occur when the device is being transported. Furthermore, such glass articles may greatly benefit from a scratch resistant surface and enhanced strength.

WO2013/016157 discloses ion exchanged thin glass laminates. TEIMACHER A ET AL, JOURNAL OF NON-CRYSTALLINE SOLIDS, NORTH-HOLLAND PHYSICS PUBLISHING. AMSTERDAM, NL, vol. 352, no. 32-35, (20060915), pages 3613 - 3617, discloses "Characterization of thermo-optical and mechanical properties of calcium aluminosilicate glasses". LUU-GEN HWA ET AL, MATERIALS CHEMISTRY AND PHYSICS, (20030201), vol. 78, no. 1, discloses "Elastic moduli of low-silica calcium alumino-silicate glasses".

### SUMMARY

Disclosed herein are laminated glass articles having a hard scratch resistant outer surface. In a first aspect of the invention, there is a laminated glass article as defined in claim 1. In a second aspect, there is a method as defined in claim 7. In a third aspect, there is a use of a laminated glass article as defined in claim 8. The laminated glass article comprises a glass core layer sandwiched between two glass clad layers.

The clad glass is paired with a core glass having a higher thermal expansion coefficient (CTE) than the CTE of the clad glass, and the clad layers having a lower thermal expansion coefficient provide a compressive stress, enhancing the overall strength. In some embodiments disclosed herein, an outer surface of one or both of the clad layers of a laminated glass article could also be further chemically strengthened, or made more scratch resistant, or both, via ion exchange.

In a set of embodiments disclosed herein, a laminated glass article, such as the outer surface of one or both of the clad layers of the laminated glass article, could be chemically strengthened via ion exchange, and in some embodiments without the clad glass being paired with a core glass having a higher (CTE) than the clad glass layer.

Additional features and advantages of the glass compositions and glass articles comprising the glass compositions will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

FIG. 1 schematically depicts a cross section of a laminated glass article according to one or more embodiments shown and described herein; and
FIG. 2 schematically depicts a fusion draw process for making the glass article of FIG. 1.

### DETAILED DESCRIPTION

High hardness glasses that are compatible with a standard fusion draw process are difficult to obtain, however we have found that the liquidus viscosity requirement associated with standard single fusion can be relaxed in the laminate fusion draw process, In some embodiments, for example, the liquidus viscosity requirement for the clad layer can be approximately 50 kPoise, i.e. significantly lower than that required of standard single fusion. In order to provide enhanced scratch resistance to the laminated glass article, we provide a clad layer that is high in hardness, and therefore this lower liquidus viscosity requirement enables the production of harder glasses than could be obtained through single fusion. Also, the clad layer can represent a fraction, and even a small fraction, of the overall mass of the laminated glass article (or laminate, or glass laminate article), so costs associated with raw materials (that would, for example, otherwise need to be distributed throughout a standard single fusion sheet) could be mitigated. Furthermore, when the hard (or ultra-hard) clad glass is paired with a core glass having a higher thermal expansion coefficient, the clad layer develops a compressive stress, enhancing the overall strength. In some embodiments as disclosed herein, the glass laminate, for example the outer surface of one or both of the clad layers, could also be chemically strengthened via ion exchange.

In some embodiments, the clad glass comprises a Young's modulus greater than about 85 GPa, greater than about 100 GPa, or greater than about 110 GPa. For example, the clad glass comprises a Young's modulus between about 85 GPa and about 120 GPa. Additionally, or alternatively, the clad glass comprises a Vickers microhardness of greater than about 9 GPa, greater than about 10 GPa, or greater than about 11 GPa.

The glass composition for use in the clad layer are aluminate glasses. Such glasses having high hardness also generally have values of liquidus viscosity which are too low for what is required for standard single fusion; however we have found that condition to be relaxed in the clad layer of laminate fusion, thus enabling fusion formed glass articles that would not otherwise be possible. We have found significant improvement in glass hardness as compared to commercially available ion-exchanged strengthened glass, thereby providing improved scratch resistance, including resistance to microductile scratches. Compared to other ultra-hard cover materials such as sapphire, the laminated glass disclosed can be strengthened due to CTE mismatch and/or ion exchange. Thus, the laminated glass article combines high hardness with some level of compressive stress in the clad layer.

In aluminate glasses, Al₂O₃ is the primary network former, and CaO and small amounts of SiO₂ are used to stabilize the glass. Other oxides such as MgO can also aid in glass stabilization. These glasses can achieve roughly 40% improvement in Young's modulus compared to commercially available ion-exchanged strengthened glass. Aluminate glass compositions typically do not require expensive or unusual raw materials and thus may be advantageous for various embodiments. Aluminate glasses can require the use of an alumina isopipe for forming the clad. Also, aluminate glasses have especially steep viscosity curves, which act to minimize compaction. Aluminate glasses generally are not ion exchangeable but may be suitable for embodiments that provide strengthened glass laminates by pairing with a higher CTE core glass.

In some embodiments, the clad glass comprises greater than about 25 mol % Al₂O₃ or greater than about 30 mol % Al₂O₃. Additionally, or alternatively, the clad glass comprises greater than about 50 mol % CaO, greater than about 55 mol % CaO, or greater than about 60 mol % CaO. Additionally, or alternatively, the clad glass comprises less than about 15 mol% SiO₂ or less than about 10 mol% SiO₂. Additionally, or alternatively, the clad glass comprises greater than about 1 mol % MgO or greater than about 3 mol % MgO.

Reference will now be made in detail to embodiments of glass compositions having low coefficients of thermal expansion and glass articles incorporating the same, examples of which are illustrated in the accompanying drawings. Whenever possible, the same reference numerals will be used throughout the drawings to refer to the same or like parts. The glass compositions and laminated glass articles comprising the glass composition will be further described herein with specific reference to the appended drawings.

The term "liquidus viscosity," as used herein, refers to the shear viscosity of the glass composition at its liquidus temperature.

The term "liquidus temperature," as used herein, refers to the highest temperature at which devitrification occurs in the glass composition.

The term "CTE," as used herein, refers to the coefficient of thermal expansion of the glass composition averaged over a temperature range from about 20°C to about 300°C.

In the embodiments of the glass compositions described herein, the concentration of constituent components (e.g., SiO₂, Al₂O₃, B₂O₃ and the like) are specified in mole percent (mol.%) on an oxide basis, unless otherwise specified.

As will be described in further detail herein, strengthened laminated glass articles may be formed by fusing glass cladding layers having a relatively low average coefficient of thermal expansion to a glass core layer which has a relatively high average coefficient of thermal expansion. As the laminated structure cools, the differences in the coefficients of thermal expansion of the glass core layer and the glass cladding layer create compressive stresses in the glass cladding layers.

The glass compositions described herein may optionally include one or more fining agents. The fining agents may include, for example, SnO₂, As₂O₃, Sb₂O₃ and combinations thereof. The fining agents may be present in the glass compositions in an amount greater than or equal to about 0 mol.% and less than or equal to about 0.7 mol.%. In exemplary embodiments, the fining agent is SnO₂. The SnO₂ may be present in the glass composition in a concentration greater than or equal to about 0 mol.% and less than or equal to about 0.7 mol.%. In these embodiments, SnO₂ may be present in the glass composition in a concentration which is greater than about 0 mol.% and less than or equal to about 0.7 mol.% or even less than or equal to about 0.15 mol.%.

When low CTE glass cladding layers are paired with a glass core layer having a higher CTE during a fusion lamination process, the difference in the CTEs of the glass core layer and the glass cladding layers results in the formation of a compressive stress in the glass cladding layers upon cooling. Accordingly, the glass compositions described herein are utilized to form a strengthened laminated glass article.

Further, the glass compositions described herein have a liquidus viscosity suitable for fusion formation, such as by the fusion down-draw process and/or the fusion lamination process.

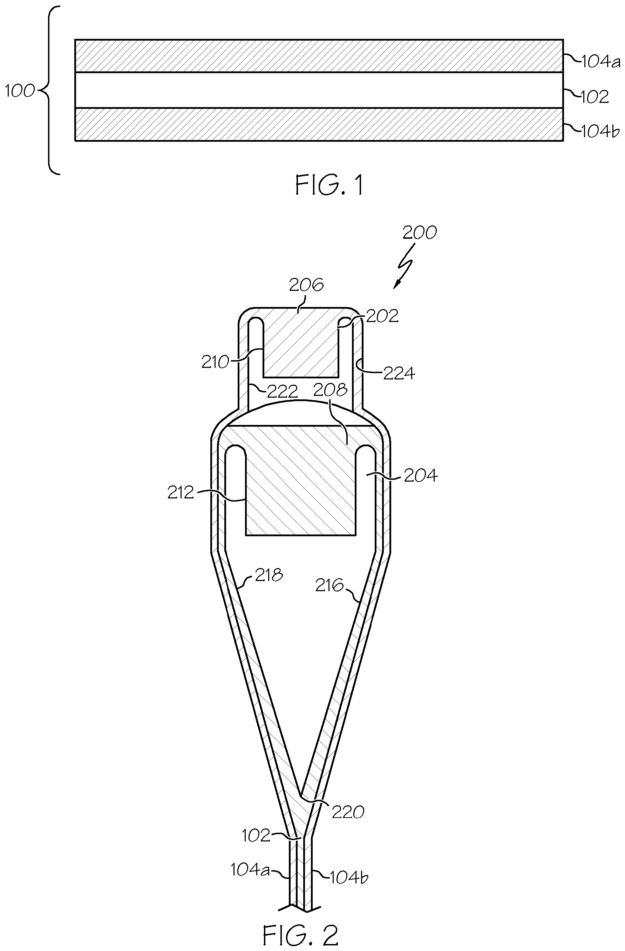

Referring now to FIG. 1, the glass compositions described herein may be used to form a glass article, such as the laminated glass article 100 schematically depicted in cross section in FIG. 1. The laminated glass article 100 generally comprises a glass core layer 102 and a pair of glass cladding layers 104a, 104b. The glass compositions described herein are particularly well suited for use as the glass claddings layers due to their relatively low coefficients of thermal expansion, as will be discussed in more detail herein.

FIG. 1 illustrates the glass core layer 102 shown comprising a first surface 103a and a second surface 103b which is opposed to the first surface 103a. A first glass cladding layer 104a is fused to the first surface 103a of the glass core layer 102 and a second glass cladding layer 104b is fused to the second surface 103b of the glass core layer 102. The glass cladding layers 104a, 104b are fused to the glass core layer 102 without any additional materials, such as adhesives, coating layers or the like, being disposed between the glass core layer 102 and the glass cladding layers 104a, 104b, thus a glass-glass or glass-glass-glass laminate. Thus, a first surface of the glass core layer is directly adjacent the first glass cladding layer, and a second surface of the glass core layer is directly adjacent the second glass cladding layer. In some embodiments, the glass core layer 102 and the glass cladding layers 104a, 104b are formed via a fusion lamination process. Diffusive layers (not shown) may form between the glass core layer 102 and the glass cladding layer 104a, or between the glass core layer 102 and the glass cladding layer 104b, or both. In such case, the average cladding coefficient of thermal expansion of the first diffusive layer has a value between that of an average cladding coefficient of thermal expansion of the core and an average cladding coefficient of thermal expansion of the first clad layer, or the average cladding coefficient of thermal expansion of the second diffusive layer has a value between that of an average cladding coefficient of thermal expansion of the core and an average cladding coefficient of thermal expansion of the second clad layer.

In embodiments of the laminated glass article 100 described herein, the glass cladding layers 104a, 104b are formed from a first glass composition having an average cladding coefficient of thermal expansion CTE_{clad} and the glass core layer 102 is formed from a second, different glass composition which has an average core coefficient of thermal expansion CTE_{core}. The CTE_{core} is greater than CTE_{clad} which results in the glass cladding layers 104a, 104b being compressively stressed without being ion-exchanged or thermally tempered.

Specifically, the glass articles 100 described herein may be formed by a fusion lamination process such as the process described in U.S. Patent No. 4,214,886. Referring to FIG. 2 by way of example, a laminate fusion draw apparatus 200 for forming a laminated glass article includes an upper isopipe 202 which is positioned over a lower isopipe 204. The upper isopipe 202 includes a trough 210 into which a molten glass cladding composition 206 is fed from a melter (not shown). Similarly, the lower isopipe 204 includes a trough 212 into which a molten glass core composition 208 is fed from a melter (not shown). In the embodiments, described herein, the molten glass core composition 208 has an average core coefficient of thermal expansion CTE_{core} which is greater than the average cladding coefficient of thermal expansion CTE_{clad} of the molten glass cladding composition 206.

As the molten glass core composition 208 fills the trough 212, it overflows the trough 212 and flows over the outer forming surfaces 216, 218, of the lower isopipe 204. The outer forming surfaces 216, 218 of the lower isopipe converge at a root 220. Accordingly, the molten glass core composition 208 flowing over the outer forming surfaces 216, 218 rejoins at the root 220 of the lower isopipe 204 thereby forming a glass core layer 102 of a laminated glass article.

Simultaneously, the molten glass cladding compositions 206 overflows the trough 210 formed in the upper isopipe 202 and flows over outer forming surfaces 222, 224 of the upper isopipe 202. The molten glass cladding composition 206 is outwardly deflected by the upper isopipe 202 such that the molten glass cladding composition 206 flows around the lower isopipe 204 and contacts the molten glass core composition 208 flowing over the outer forming surfaces 216, 218 of the lower isopipe, fusing to the molten glass core composition and forming glass cladding layers 104a, 104b around the glass core layer 102.

As noted hereinabove, the molten glass core composition 208 generally has an average core coefficient of thermal expansion CTE_{core} which is greater than the average cladding coefficient of thermal expansion CTE_{clad} of the molten glass cladding composition 206. Accordingly, as the glass core layer 102 and the glass cladding layers 104a, 104b cool, the difference in the coefficients of thermal expansion of the glass core layer 102 and the glass cladding layers 104a, 104b cause a compressive stresses to develop in the glass cladding layers 104a, 104b. The compressive stress increases the strength of the resulting laminated glass article.

Referring again to the laminated glass article 100 depicted in FIG. 1, the glass cladding layers 104a, 104b of the laminated glass article 100 are formed from a glass composition with a relatively low average coefficient of thermal expansion.

It should now be understood that the glass compositions described herein have relatively low coefficients of thermal expansion. As such, the glass compositions described herein are particularly well suited for use in conjunction with glass compositions with relatively high coefficients of thermal expansion to form a compressively stressed laminated glass article by the fusion laminate process. These glass articles may be employed in a variety of consumer electronic devices including, without limitation, mobile telephones, personal music players, tablet computers, LCD and LED displays, automated teller machines and the like.

It should also be understood that the properties of the glass compositions described herein, (e.g., the liquidus viscosity, the liquidus temperature, and the like) make the glass compositions well suited for use with fusion forming processes, such as the fusion down draw process or the fusion lamination process.

Further, while specific reference has been made herein to the use of the glass compositions as cladding layers of a laminated glass article, it should be understood that the glass compositions may also be used to independently form glass articles (i.e., non-laminated glass articles) such as, for example, cover glasses for electronic devices and other, similar glass articles.

The glass articles described herein can be used for a variety of applications including, for example, for cover glass or glass backplane applications in consumer or commercial electronic devices including, for example, LCD, LED, OLED, and quantum dot displays, computer monitors, sound bars, and automated teller machines (ATMs); for touch screen or touch sensor applications, for portable electronic devices including, for example, mobile telephones, personal media players, and tablet computers; for integrated circuit applications including, for example, semiconductor wafers; for photovoltaic applications; for architectural glass applications; for automotive or vehicular glass applications including, for example, windows, lighting, instruments, and helmet visors; for commercial or household appliance applications; for lighting or signage (e.g., static or dynamic signage) applications; for transportation applications including, for example, rail and aerospace applications; or for antimicrobial applications.

A variety of products can incorporate the glass articles described herein. In some embodiments, an electronic device (e.g., a consumer or commercial electronic device) such as, for example, a LCD, LED, OLED, or quantum dot display comprises one or more of the glass articles, which can be deployed as a cover glass, or as a glass backplane. In some embodiments, an integrated circuit such as, for example, a semiconductor wafer, comprises one or more of the glass articles. In some embodiments, a photovoltaic cell comprises one or more of the glass articles. In some embodiments, an architectural pane comprises one or more of the glass articles. In some embodiments, a vehicular member or component such as, for example, a glazing or window, a light, or an instrument comprises one or more of the glass articles. In some embodiments, a helmet visor comprises one or more of the glass articles. In some embodiments, an appliance (e.g., a household or commercial appliance) comprises one or more of the glass articles. In some embodiments, a light or a sign comprises one or more of the glass articles.

### EXAMPLES

Various embodiments will be further clarified by the following examples.

A plurality of glass compositions, which can be suitable for use as a clad glass of a glass article, and selected properties of the glass compositions are listed in Table 1 below. Example glass compositions 3-11 are according to the invention and example glass compositions of examples 1-2 and 12-13 are not according to the invention.

**Table 1: Exemplary Clad Glass Compositions**

| | 1 | 2 | 3 | 4 | 5 | 6 | 7 |
|---|---|---|---|---|---|---|---|
| SiO₂ | 30 | 25 | | 8.3 | 8 | 7.72 | 7.46 |
| Al₂O₃ | 15 | 15 | 34.6 | 33 | 31.79 | 30.67 | 29.62 |
| B₂O₃ | | | | | | | |
| MgO | 5 | 5 | 3.8 | | 3.66 | 3.53 | 3.41 |
| CaO | | | 61.6 | 58.7 | 56.55 | 54.55 | 52.69 |
| SrO | | | | | | 3.53 | 3.41 |
| ZnO | 5 | 5 | | | | | 3.41 |
| La₂O₃ | 10 | 15 | | | | | |
| Ta₂O₅ | 30 | 30 | | | | | |
| Y₂O₃ | 5 | 5 | | | | | |
| ZrO₂ | | | | | | | |
| Li₂O | | | | | | | |
| TiO₂ | | | | | | | |
| Shear Modulus (GPa) | 53.77 | 53.88 | 42.93 | 41.32 | 41.9 | 41.91 | 42.16 |
| Young's Modulus (GPa) | 141.62 | 142.42 | 109.7 | 105.68 | 107.39 | 107.06 | 108.07 |
| Annealing Point (C) | | | | | 814.5 | 807 | 783.5 |
| Strain Point (C) | | | | | 780.7 | 772.1 | 747.9 |
| Softening Point (C) | 938.5 | | | | 947.5 | 942.6 | 924.2 |

| Table 1: Exemplary Clad Glass Compositions (continued) | | | | | | | |
|---|---|---|---|---|---|---|---|
| | 8 | 9 | 10 | 11 | 12 | 13 | |
| SiO₂ | 14.81 | 8 | 8 | 8 | 65 | 65 | |
| Al₂O₃ | 29.44 | 30.4 | 30.4 | 30.4 | 12 | 12 | |
| B₂O₃ | | | | | 7 | 7 | |
| MgO | 3.39 | 3.5 | 3.5 | 3.5 | 5 | 5 | |
| CaO | 52.36 | 54.1 | 54.1 | 54.1 | 6 | 6 | |
| SrO | | | | | | | |
| ZnO | | | | | | | |
| La₂O₃ | | | | | | | |
| Ta₂O₅ | | | | | | | |
| Y₂O₃ | | | 4 | | | | |
| ZrO₂ | | | | | | | |
| Li₂O | | | | 4 | 5 | 5 | |
| TiO₂ | | 4 | | | | | |
| Shear Modulus (GPa) | 41.24 | 42.3 | 43.47 | 43.56 | 33.18 | 32.88 | |
| Young's Modulus (GPa) | 105.61 | 108.33 | 111.14 | 111.52 | 81.05 | 81.05 | |
| Annealing Point (C) | 824 | | | | | | |
| Strain Point (C) | 790 | | | | | | |
| Softening Point (C) | 958.1 | | | | | | |

A glass article is formed as described herein and comprises a core formed from a suitable core glass composition (e.g., soda-lime glass, silicate glass, borosilicate glass, aluminosilicate glass, alkali aluminosilicate glass, alkaline-earth aluminosilicate glass, or combinations thereof) and a clad formed from an exemplary clad glass composition (e.g., Examples 3-11.

It will be apparent to those skilled in the art that various modifications and variations can be made to the embodiments described herein without departing from the spirit and scope of the claimed subject matter. Thus it is intended that the specification cover the modifications and variations of the various embodiments described herein provided such modification and variations come within the scope of the appended claims.

## Claims

1. A laminated glass article comprising two outer clad layers and an inner core layer, the clad layers comprising a clad glass comprising greater than 25 mol % Al₂O₃ and having a Young's modulus greater than 85 GPa,
wherein the core layer comprises a core glass having a higher coefficient of thermal expansion averaged over the range of temperatures from 25°C to 300°C than the clad glass.

2. The glass article of claim 1, wherein the clad glass further comprises greater than 50 mol % CaO.

3. The glass article of claim 2, wherein the clad glass further comprises greater than 1 mol % MgO.

4. The glass article of claim 3, wherein the clad glass comprises less than 15 mol% SiO₂.

5. The glass article of any of the preceding claims, wherein the Young's modulus of the clad glass is between 85 GPa and 120 GPa.

6. The glass article of claim 1, wherein the clad glass comprises:
greater than 50 mol % CaO;
greater than 1 mol% MgO; and
less than 15 mol% SiO₂.

7. A method comprising forming the glass article of any of the preceding claims using a fusion draw process.

8. Use of the glass article of any of claims 1 to 6 for cover glass or glass backplane applications in consumer or commercial electronic devices including LCD, LED, OLED, and quantum dot displays, computer monitors, sound bars, and automated teller machines (ATMs); for touch screen or touch sensor applications, for portable electronic devices including mobile telephones, personal media players, and tablet computers; for integrated circuit applications including semiconductor wafers; for photovoltaic applications; for architectural glass applications; for automotive or vehicular glass applications including windows, lighting, instruments, and helmet visors; for commercial or household appliance applications; for lighting or signage applications; for transportation applications including rail and aerospace applications; or for antimicrobial applications.

## Patentansprüche

1. Laminierter Glasartikel, umfassend zwei äußere Mantelschichten und eine innere Kernschicht, wobei die Mantelschichten ein Mantelglas umfassen, das mehr als 25 Mol-% Al₂O₃ umfasst und einen Elastizitätsmodul von mehr als 85 GPa aufweist,
wobei die Kernschicht ein Kernglas umfasst, das einen höheren Wärmeausdehnungskoeffizienten, gemittelt über den Temperaturbereich von 25 °C bis 300 °C, als das Mantelglas aufweist.

2. Glasartikel nach Anspruch 1, wobei das Mantelglas ferner mehr als 50 Mol-% CaO umfasst.

3. Glasartikel nach Anspruch 2, wobei das Mantelglas ferner mehr als 1 Mol-% MgO umfasst.

4. Glasartikel nach Anspruch 3, wobei das Mantelglas weniger als 15 Mol-% SiO₂ umfasst.

5. Glasartikel nach einem der vorhergehenden Ansprüche, wobei der Elastizitätsmodul des Mantelglases zwischen 85 GPa und 120 GPa liegt.

6. Glasartikel nach Anspruch 1, wobei das Mantelglas umfasst:
mehr als 50 Mol-% CaO;
mehr als 1 Mol-% MgO; und
weniger als 15 Mol-% SiO₂.

7. Verfahren, umfassend Ausbilden des Glasartikels nach einem der vorhergehenden Ansprüche unter Verwendung eines Schmelzziehprozesses.

8. Verwendung des Glasartikels nach einem der Ansprüche 1 bis 6 für Deckglas- oder Glasrückwandanwendungen in Verbraucher- oder kommerziellen elektronischen Vorrichtungen, einschließlich LCD, LED, OLED und Quantenpunktdisplays, Computermonitoren, Soundbars und Geldausgabeautomaten (GAA); für Berührungsbildschirm- oder Berührungssensoranwendungen, für tragbare elektronische Vorrichtungen, einschließlich Mobiltelefone, persönliche Medienabspielgeräte und Tablet-Computer; für integrierte Schaltungsanwendungen, einschließlich Halbleiterwafer; für Photovoltaikanwendungen; für architektonische Glasanwendungen; für Automobil- oder Fahrzeugglasanwendungen, einschließlich Fenster, Beleuchtung, Instrumente und Helmvisiere; für gewerbliche oder Haushaltsgeräteanwendungen; für Beleuchtungs- oder Beschilderungsanwendungen; für Transportanwendungen einschließlich Bahn- und Luft- und Raumfahrtanwendungen; oder für antimikrobielle Anwendungen.

## Revendications

1. Article en verre feuilleté comprenant deux couches de revêtement externes et une couche d'âme interne, les couches de revêtement comprenant un verre de revêtement comprenant plus de 25 % en moles d'Al₂O₃ et possédant un module de Young supérieur à 85 GPa,
ladite couche d'âme comprenant un verre d'âme possédant un coefficient de dilatation thermique moyen plus élevé sur la plage de températures allant de 25°C à 300°C que le verre de revêtement.

2. Article en verre selon la revendication 1, ledit verre de revêtement comprenant en outre plus de 50 % en moles de CaO.

3. Article en verre selon la revendication 2, ledit verre de revêtement comprenant en outre plus de 1 % en moles de MgO.

4. Article en verre selon la revendication 3, ledit verre de revêtement comprenant moins de 15 % en moles de SiO₂.

5. Article en verre selon l'une quelconque des revendications précédentes, ledit module de Young du verre de revêtement étant compris entre 85 GPa et 120 GPa.

6. Article en verre selon la revendication 1, ledit verre de revêtement comprenant :
plus de 50 % en moles de CaO ;
plus de 1 % en moles de MgO ; et
moins de 15 % en moles de SiO₂.

7. Procédé comprenant la formation de l'article en verre selon l'une quelconque des revendications précédentes à l'aide d'un procédé d'étirage par fusion.

8. Utilisation de l'article en verre selon l'une quelconque des revendications 1 à 6 pour des applications de verre de protection ou de panneau arrière en verre dans des dispositifs électroniques grand public ou commerciaux, comprenant des dispositifs d'affichage LCD, LED, OLED et à points quantiques, des moniteurs d'ordinateur, des barres de son et des guichets automatiques bancaires (GAB) ; pour des applications d'écrans tactiles ou de capteurs tactiles, pour des dispositifs électroniques portables, comprenant les téléphones mobiles, les lecteurs multimédias personnels et les ordinateurs tablettes ; pour des applications de circuits intégrés, comprenant des tranches de semi-conducteur ; pour des applications photovoltaïques ; pour des applications de verre architectural ; pour des applications de verre automobile ou de véhicule, comprenant des fenêtres, des éclairages, des instruments et des visières de casque ; pour des applications d'appareils électroménagers ou commerciaux ; pour des applications d'éclairage ou de signalisation ; pour des applications de transport, comprenant des applications ferroviaires et aérospatiales ; ou pour des applications antimicrobiennes.
